# EUROPEAN PATENT APPLICATION

(11) **EP 4 635 719 A1**
(43) Date of publication of application: **22.10.2025**
(21) Application number: 25166448.8
(22) Date of filing: 26.03.2025
(51) Int. Cl.: B29C 65/10, B29C 65/36, B29C 65/48, B29C 65/50, B65B 51/26

(54) **SEALING SYSTEM FOR SEALING A TUBE OF PACKAGING MATERIAL FOR THE PRODUCTION OF PACKAGES CONTAINING A POURABLE PRODUCT**

(30) Priority: 05.04.2024 IT 202400007579
(71) Applicant: Tetra Laval Holdings & Finance S.A., 1009 Pully (CH)
(72) Inventor: FERRARI, Claudio, 41123 MODENA (IT); BONONI, Massimiliano, 41123 MODENA (IT)
(74) Representative: Tetra Pak Patent Attorneys

(57) **Abstract**

There is described a sealing system (10) for a packaging machine (1) for the production of packages (2) starting from a web (4) of packaging material having a first longitudinal edge (4a) and a second longitudinal edge (4b) and configured to be progressively folded into a tube (3) by superimposing the second longitudinal edge (4b) on the first longitudinal edge (4a) thereby defining a superimposing region (50) of the tube (3), the sealing system (10) comprises: a presser roller (15) designed to be located inside the tube (3) so that the superimposing region (50) is interposed, in use, between the presser roller (15) and a folding member (6) configured to fold the web (4), the presser roller (15) is configured to press the superimposing region (50) against said folding member (6) for providing the tube (3) with a longitudinal seal (11); a support member (16) carrying the presser roller (15) and rotatably supporting the presser roller (15); the support member (16) comprises a heatsink portion (19) made of thermally conductive material which is thermally coupled with the presser roller (15) and is configured to exchange heat with the presser roller (15).

## Description

### TECHNICAL FIELD

The present invention relates to a sealing system for sealing a tube of packaging material for the production of packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which form and fill the packages starting from a multilayer web of packaging material.

In particular, the web of packaging material is initially wound in a reel and fed through a plurality of unwinding rollers.

The web of packaging material is typically maintained in a closed, sterile environment, and, while advanced by the aforementioned unwinding rollers, is folded to form a continuous tube by means of a known web folding device. The tube is then sealed longitudinally, i.e. it is provided with a continuous longitudinal seal.

In order to perform the package forming operations, the tube is continuously fed along a straight vertical direction, is filled with the sterilized food product from above and is formed, sealed and subsequently cut along equally spaced transversal cross-sections extending along a direction orthogonal to the vertical direction.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof.

The finished packages are thereby obtained.

In order to form the tube, the web folding device is configured to progressively fold the web from a sheet-like configuration to a C-shaped configuration and then into a substantially tubular shaped configuration whereby a first longitudinal edge of the web is partially superimposed on a second longitudinal edge of the web.

In detail, the web folding device usually includes a plurality of folding rollers arranged so as to define a number of (usually two) passages for the packaging material varying gradually in section from a C shape to a circular shape.

In order to provide the tube with the aforementioned longitudinal seal, the packaging machine comprises a sealing system configured to seal the first longitudinal edge and the second longitudinal edge together.

The sealing system comprises an applicator device arranged upstream of the web folding device and configured for applying a sealing strip made of heat-seal plastic material on the first longitudinal edge.

More specifically, a first longitudinal portion of the sealing strip is applied and heat-sealed to a first longitudinal edge of the web.

After such application, a second longitudinal portion of the sealing strip protrudes from the first longitudinal edge.

On interacting with the web folding device, the second longitudinal edge of the web is superimposed partly on the second longitudinal portion of the sealing strip and partly on the first longitudinal edge.

At this point, the sealing strip is applied to the web by performing a heating step and a pressing step.

To this end, the sealing system includes a heating device arranged adjacent to an outer surface of the tube, and in particular to the region of the tube at which the first longitudinal edge is superimposed onto the second longitudinal edge and at which the sealing strip is located. The heating device is configured to locally heat up such region.

According to a known solution, the heater device includes a nozzle for supplying hot air at such region.

The sealing system further includes a presser roller (or pressure roller) arranged downstream the heater device and facing one of the aforementioned folding rollers.

In detail, the presser roller is arranged inside the tube in formation, while the folding roller is arranged outside the tube in formation.

In greater detail, the aforementioned region at which the sealing strip is located is interposed between the presser roller and the relative folding roller.

The presser roller is configured to carry out the pressing step.

That is, the sealing strip advances in between the presser roller and the relative folding roller, thereby being pressed against such folding roller by the presser roller.

In this way, the sealing strip is first heated and then pressed, thereby being secured to the packaging material and defining the longitudinal seal of the tube.

Although the known packaging machines and sealing systems thereof are structurally and functionally valid, the Applicant has observed that they are still open to further improvement, in particular as per the lifespan of the components thereof.

### DISCLOSURE OF INVENTION

It is therefore an object of the present invention to provide a sealing system for sealing a tube of packaging material, which is designed to meet the above-mentioned need in a straightforward and low-cost manner.

This object is achieved by a sealing system as claimed in the appended independent claim 1. Preferred embodiments of the present invention are laid down in the appended dependent claims.

### BRIEF DESCRIPTION OF THE DRAWINGS

A non-limiting embodiment of the present invention will be described by way of example with reference to the accompanying drawings, in which:
Figure 1 is a schematic perspective view, with parts removed for clarity, of a packaging machine including a sealing system according to the present invention;

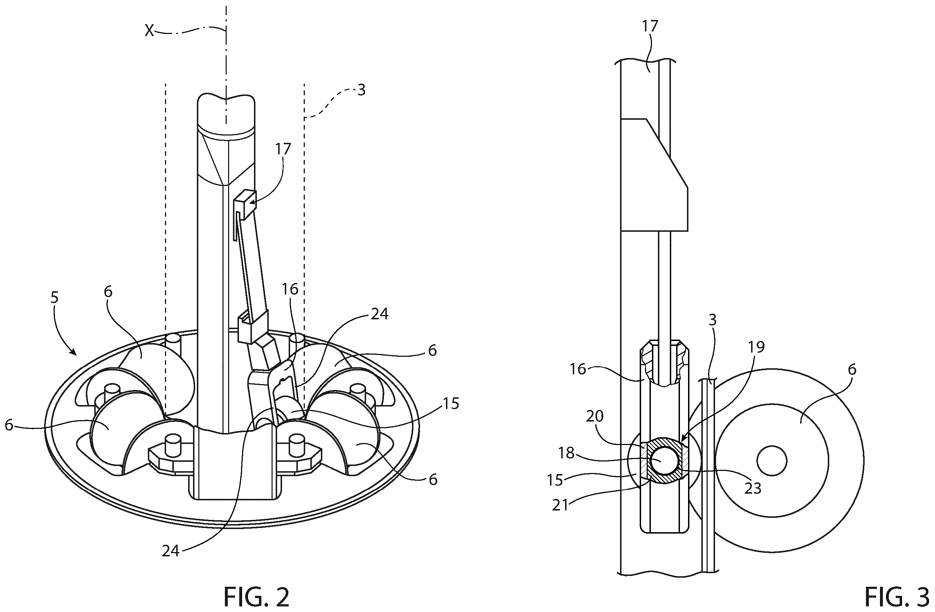

Figure 2 is a larger-scale perspective view, with parts removed for clarity, of a detail of the packaging machine of Figure 1 showing some components of the sealing system;
Figure 3 is a partially sectioned side view, with parts removed for clarity, of the detail of Figure 2;
Figure 4 is a larger-scale sectioned top view, with parts removed for clarity, of a presser roller of the sealing system.

### BEST MODE FOR CARRYING OUT THE INVENTION

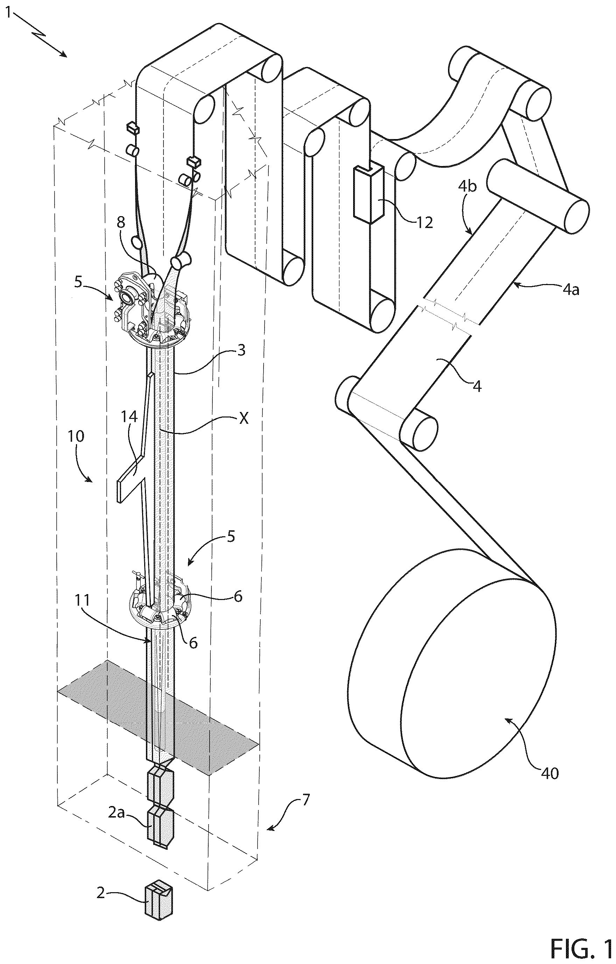

With reference to Figure 1, number 1 indicates as a whole a non-limiting example of a packaging machine configured for producing sealed packages 2 containing a pourable product, preferably a pourable food product such as pasteurized or UHT milk, water, fruit juice, wine, peas, beans, etc.

In detail, packaging machine 1 is configured to form, seal and fold packages 2 starting from a web 4 of packaging material, which is initially wound in a reel 40, and then folded into a tube 3 of packaging material, according to a manner known and not described in detail.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

As schematically shown in Figure 1, packaging machine 1 comprises conveying means configured to advance the web 4 along an advancement path.

Packaging machine 1 comprises a web folding device 5 for progressively folding the advancing web 4 into a tube 3 of packaging material.

In particular, in order to form tube 3, web folding device 5 is configured to progressively fold web 4 from a sheet-like configuration to a C-shaped configuration and then into a substantially tubular shaped configuration whereby a first longitudinal edge 4a of web 4 is partially superimposed on a second longitudinal edge 4b of web 4.

To this end, web folding device 5 includes a plurality of forming rollers 6 arranged to define at least one through passage, preferably two as visible in Figure 1, for web 4 and configured to interact with web 4 so as to progressively bend and fold web 4 into a tubular shape, in a manner known and not described in detail.

In detail, each through passage is delimited by a number of forming rollers 6, so that the axes of such forming rollers 6 lie in the same plane perpendicular to an advancing direction of tube 3.

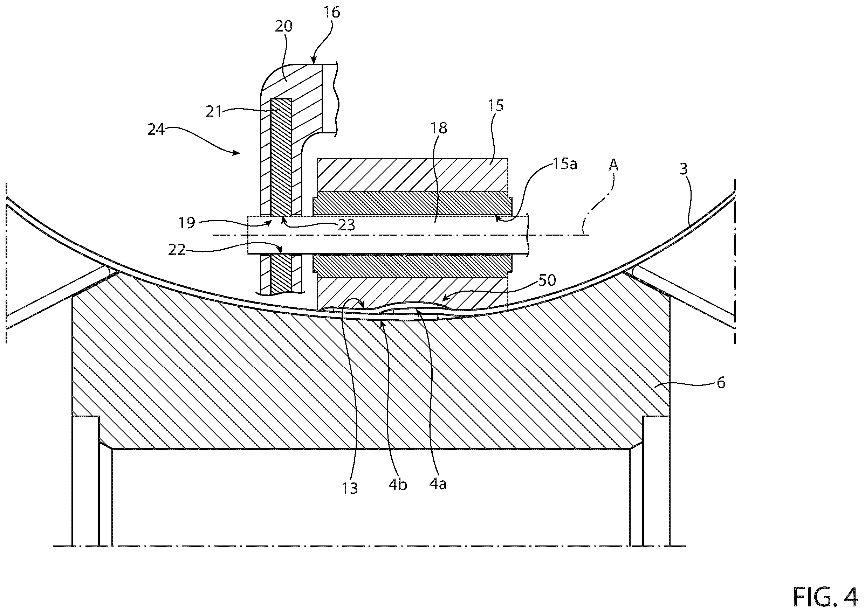

In light of the above, web folding device 5, and in particular folding rollers 6, is configured to progressively fold web 4 into a tube 3 by superimposing second longitudinal edge 4b on first longitudinal edge 4a thereby defining a superimposing region 50 of the tube 3 facing inwards of said tube 3 (Figure 4).

Preferably, packaging machine 1 comprises a sterilization unit (not shown) configured for applying a sterilizing agent, for example containing hydrogen peroxide, on web 4 prior to its folding into tube 3.

Packaging machine 1 comprises a forming and sealing unit 7 (only schematically shown) for forming tube 3 by imparting a predetermined external shape, corresponding to a precursor of the shape of package 2, to successive longitudinal portions of tube 3, and for sealing tube 3 at equally spaced cross-sections (according to a manner known and not described in detail).

Packaging machine 1 comprises a filling system 8 (only partially shown) configured to fill tube 3 with the pourable product.

Preferably, forming and sealing unit 7 has a longitudinal axis X along which tube 3 is fed, in use.

In particular, such longitudinal axis X is parallel to a straight direction, which preferably is a straight vertical direction, as schematized in Figure 1.

Hence, in use, tube 3 is fed along the longitudinal axis X, downwards, and while being filled from above is formed and sealed by forming and sealing unit 7, according to a manner known and not described in detail.

More specifically, tube 3 is drawn (downwards) along the longitudinal axis X by forming and sealing unit 7 in a known manner.

In this way, a plurality of pillow packs 2a are obtained.

Packaging machine 1 further comprises a folding unit (known per se and not shown) for folding the pillow packs 2a, thereby obtaining packages 2, according to a manner known and not described in detail.

Packaging machine 1 further comprises a sealing system 10 configured for longitudinally sealing tube 3, i.e. configured for providing tube 3 with a longitudinal seal 11.

In one preferred embodiment, sealing system 10 comprises an applicator device 12 configured to apply a sealing strip 13 (shown in Figure 4) made of heat-seal plastic material to first longitudinal edge 4a of web 4 prior to its folding into a tube 3.

More specifically, a first longitudinal portion of sealing strip 13 is applied and heat-sealed to first longitudinal edge 4a.

In particular, sealing strip 13 is heat-sealed by locally melting the heat-seal polyethylene layer at first longitudinal edge 4a and the heat-seal plastic of the first longitudinal portion of the sealing strip 13 itself.

On interacting with folding rollers 6 of web folding device 5, second longitudinal edge 4b is laid on the outside of first longitudinal edge 4a with respect to axis X of tube 3 being formed.

In this way, second longitudinal edge 4b facing axis X of tube 3 is superimposed partly on the second longitudinal portion of sealing strip 13 and partly on first longitudinal edge 4a.

The aforementioned superimposing region 50 is thereby obtained.

Hence, preferably, superimposing region 50 also includes sealing strip 13.

In order to complete the longitudinal sealing of tube 3 superimposing region 50 is heated.

To this end, sealing system 10 further comprises a heating device 14 configured to provide heat towards to and at superimposing region 50.

Expediently, heating device 14 is arranged adjacent to an outer surface of tube 3, and in particular to the superimposing region 50. Heating device 14 is configured to locally heat up superimposing region 50.

In one embodiment, heating device 14 includes a nozzle for supplying hot air at superimposing region 50.

In another embodiment, heating device 14 includes electromagnetic induction means for heating the gas-barrier layer, which is preferably made of aluminum, by electromagnetic induction.

Sealing system 10 further comprises a presser roller (or pressure roller) 15 designed to be located inside tube 3 so that superimposing region 50 is interposed, in use, between presser roller 15 and a folding member configured to fold web 4. In particular, the folding member is defined by one of said folding rollers 6.

Reference will be made in the following to such one folding roller 6, i.e. the folding roller 6 facing presser roller 15.

Presser roller 15 is configured to press superimposing region 50 against folding roller 6 for providing tube 3 with a longitudinal seal.

In detail, presser roller 15 is configured to press also sealing strip 13 against folding roller 6.

Sealing system 10 further comprises a support member 16 carrying presser roller 15 and rotatably supporting presser roller 15.

In particular, support member 16 is mounted to a fixed frame 17 of packaging machine 1.

More in particular, support member 16 includes a fork element.

Presser roller 15 is coupled to such fork element in a rotatable manner.

More specifically, presser roller 15 has a central hub 15a and support member 16 includes a shaft 18 mounted to the fork element and engaging hub 15a, so that presser roller 15 is rotatably coupled to shaft 18.

In detail, shaft 18 is defined by a pin element or rod element, which in use is rotationally fixed.

In greater detail, shaft 18 extends along a central axis A, which then defines the rotation axis of presser roller 15.

In light of the above, in use, presser roller 15 rotates about shaft 18 and rolls over the inside of tube 3, and particularly on superimposing region 50, so as to exert a rolling pressure thereon.

The relative rolling of presser roller 15 on shaft 18 generates heat due to rolling friction.

Moreover, further heat is provided to presser roller 15 in case heating device 14 includes a nozzle for supplying hot air at superimposing region 50.

According to an aspect of the present disclosure, support member 16 comprises a heatsink portion 19 made of thermally conductive material which is thermally coupled with pressure roller 15 and is configured to exchange heat with pressure roller 15.

In detail, heatsink portion 19 is configured to absorb heat from pressure roller 15.

According to the preferred embodiment shown, support member 16 comprises a main body 20 and an insert 21 embedded in main body 20.

In practice, insert 21 defines a core of the fork element defined by support member 16, which core is enclosed in main body 20.

Advantageously, insert 21 is made of thermally conductive material and defines at least part, in particular part, of heatsink portion 19, whereas main body 20 is made of a material which has a thermal conductivity lower than the thermal conductivity of the material of insert 21.

In detail, insert 21 is thermally coupled to presser roller 15, so as to absorb heat therefrom.

In particular, insert 21 is made of copper.

The Applicant has observed that copper allows to combine a high thermal conductivity with a rather good resistance and stiffness for insert 21.

Conveniently, insert 21 is completely enclosed by main body 20.

In other words, main body 20 completely surrounds and covers insert 21.

In this way, insert 21 is protected by main body 20.

Expediently, main body 20 is made of an anti-corrosion material.

Preferably, main body 20 is made of stainless steel.

In this way, it is possible to safely implement a copper insert 21 which allows for an optimal heat dissipation form presser roller 15 while being effectively protected from corrosion and wear by main body 20 made of stainless steel.

According to an alternative embodiment, main body 20 may be defined by a coating applied on insert 21.

Accordingly, such coating is preferably made of anti-corrosion material.

Advantageously, shaft 18 is made of a thermally conductive material and defines part of heatsink portion 19.

In particular, shaft 18 is advantageously arranged in contact with insert 21. So, shaft 18 passes through main body 20.

In other words, insert 21 includes a slot 22 engaged by shaft 18.

Such engagement preferably defines the coupling of shaft 18 with main body 20.

In light of the above, a contact area 23 is defined between an outer surface of shaft 18 and an inner surface of slot 22.

Slot 22 is preferably a through hole which also extends through main body 20, as shown in Figure 4.

In light of the above, shaft 18 is thermally coupled with presser roller 15 and insert 21 is thermally coupled with presser roller 15 via shaft 18.

Thanks to the configuration of support member 16 described above, it is possible to effectively remove (absorb) heat from presser roller 15 and dissipate such heat. In particular, shaft 18 absorbs the heat generated, in use, by the rolling friction between presser roller 15, i.e. hub 15a, and the outer surface of shaft 18, and transmits such heat to insert 21 (thanks to a large contact area with the insert 21), thereby dissipating such heat away from presser roller 15.

Therefore, presser roller 15 can be maintained at a desired lower temperature. Hence, wear of presser roller 15 is significantly reduced. Thus, the lifespan of presser roller 15 is increased.

Preferably, main body 20 is made of a first material having a first thermal conductivity, shaft 18 is made of a second material having a second thermal conductivity and insert 21 is made of a third material having a third thermal conductivity.

Conveniently, the first thermal conductivity is lower than the second thermal conductivity and/or the second thermal conductivity is lower than the third thermal conductivity.

Advantageously, shaft 18 is made of metal carbide.

The Applicant has observed that a metal carbide shaft 18 presents the stiffness and resistance to wear required for withstanding the rolling friction stresses deriving from presser roller 15, while at the same time having an appropriate thermal conductivity.

As said, support member 16 includes a fork element. Such fork element has at least one arm 24. More specifically, insert 21 is arranged within the arm(s) 24.

In one embodiment not shown, the fork element is defined by an L-shaped fork having only one arm 24. Accordingly, heatsink portion 19 is arranged at said arm 24.

In such a case, an axial stopper (not shown) is provided opposite to arm 24 for preventing an axial sliding of presser roller 15 along shaft 18.

In another embodiment, which is the embodiment shown, the fork element includes a pair of arms 24 arranged at opposite axial end portions of shaft 18 (relative to axis A).

Shaft 18 is coupled, and in particular rigidly fixed, to both arms 24.

In detail, each arm 24 includes one said slot 22 engaged by one respective axial end of shaft 18.

Advantageously, each arm 24 includes one heatsink portion 19, that is one respective insert 21 is arranged in each one of arms 24.

This configuration allows for a better heat exchange with presser roller 15, and hence for a better heat absorption and dissipation.

The advantages of sealing system 10 according to the present invention will be clear from the foregoing description.

In particular, thanks to support member 16 according to the present disclosure, it is possible to effectively remove (absorb) heat from presser roller 15 and dissipate such heat. In particular, shaft 18 absorbs the heat generated, in use, by the rolling friction between presser roller 15, i.e. hub 15a, and the outer surface of shaft 18, and transmits such heat to insert 21, thereby dissipating such heat away from presser roller 15.

Therefore, presser roller 15 can be maintained at a desired temperature. Hence, wear of presser roller 15 is significantly reduced. Thus, the lifespan of presser roller 15 is increased.

Clearly, changes may be made to sealing system 10 as described herein without, however, departing from the scope of protection as defined in the accompanying claims.

In particular, in one embodiment presser roller 15 may be fixed integrally to shaft 18, and therefore rotationally fixed with respect to shaft 18, whereas shaft 18 may be rotatably mounted to the fork element, i.e. to arm(s) 24 of support member 16.

In such a case, the heatsink portion 19 defined by shaft 18 and insert(s) 21 may be configured to absorb from presser roller 15 heat generated by heating device 14 or by any other heat source.

## Claims

1. Sealing system (10) for a packaging machine (1) for the production of packages (2) containing a pourable product starting from a sheet-like web (4) of packaging material having a first longitudinal edge (4a) and a second longitudinal edge (4b) and configured to be progressively folded into a tube (3) by superimposing the second longitudinal edge (4b) on the first longitudinal edge (4a) thereby defining a superimposing region (50) of the tube (3), the sealing system (10) being configured to longitudinally seal the tube (3) and comprising:
- a presser roller (15) designed to be located inside the tube (3) so that the superimposing region (50) is interposed, in use, between the presser roller (15) and a folding member (6) configured to fold the web (4), the presser roller (15) being configured to press the superimposing region (50) against said folding member (6) for providing the tube (3) with a longitudinal seal (11);
- a support member (16) carrying the presser roller (15) and rotatably supporting the presser roller (15);
wherein the support member (16) comprises a heatsink portion (19) made of thermally conductive material which is thermally coupled with the presser roller (15) and is configured to exchange heat with the presser roller (15).

2. Sealing system as claimed in claim 1, and further comprising folding rollers (6) arranged to define at least one through passage for the web (4) and configured to interact with the web (5) so as to progressively bend the web (4) into a tubular shape by superimposing the second longitudinal edge (4b) on the first longitudinal edge (4a) thereby forming the tube (3) and defining said superimposing region (50) of the tube (3), one of said folding rollers (6) defining said folding member (6).

3. Sealing system as claimed in claim 1 or 2, wherein the support member (16) comprises a main body (20) and an insert (21) embedded in the main body (20), the insert (21) being made of thermally conductive material and defining at least part of said heatsink portion (19), the main body (20) being made of a material which has a thermal conductivity lower than the thermal conductivity of the material of the insert (21).

4. Sealing system as claimed in claim 3, wherein the insert (21) is made of copper.

5. Sealing system as claimed in claim 3 or 4, wherein the insert (21) is completely enclosed by the main body (20).

6. Sealing system as claimed in any one of the claims 3 to 5, wherein the main body (20) is made of an anti-corrosion material.

7. Sealing system as claimed in any one of the claims 3 to 6, wherein the main body (20) is made of stainless steel.

8. Sealing system as claimed in any one of the claims 3 to 7, wherein the main body (20) is defined by a coating applied on and covering the insert (21).

9. Sealing system as claimed in any one of the foregoing claims, wherein the presser roller (15) has a central hub (15a);
wherein the support member (16) comprises a shaft (18) engaging said hub (15a) so that the presser roller (15) is coupled to the shaft (18) in a rotatable manner;
wherein the shaft (18) is made of a thermally conductive material and defines part of the heatsink portion (19).

10. Sealing system as claimed in claim 3 and 9, wherein the shaft (18) is arranged in contact with the insert (21), through the main body (20).

11. Sealing system as claimed in claim 9 or 10, wherein the shaft (18) is made of metal carbide.

12. Sealing system as claimed in claim 10 or 11, wherein the main body (20) is made of a first material having a first thermal conductivity, the shaft (18) is made of a second material having a second thermal conductivity and the insert (21) is made of a third material having a third thermal conductivity;
wherein the first thermal conductivity is lower than the second thermal conductivity and the second thermal conductivity is lower than the third thermal conductivity.

13. Sealing system as claimed in any one of the foregoing claims, wherein the support member (18) includes a fork element having at least one arm (24) and a shaft (18) connected to the at least one arm (24), the presser roller (15) being coupled to the shaft (18) so to be rotatable with respect to the at least one arm (24);
wherein said heatsink portion (19) is arranged at said at least one arm (24).

14. Sealing system as claimed in claim 13, wherein the shaft (18) extends along a central axis (A), the fork element including a pair of said arms (24) arranged at opposite axial end portions of the shaft (18), relative to said central axis (A), the shaft (18) being coupled to both arms (24);
and wherein each arm (24) of said pair of arms (24) includes one respective heatsink portion (19).

15. Sealing system as claimed in any one of the foregoing claims, and comprising:
- an applicator device (12) configured to apply a sealing strip (13) made of heat-seal plastic material to the first longitudinal edge (4a) of the web (4) prior to its folding into a tube (3), the presser roller (15) being configured to press also the sealing strip (13) against the folding member (6); and/or
- a heating device (14) configured to provide heat towards and at said superimposing region (50).

16. Packaging machine (1) configured to produce sealed packages (2) containing a pourable product starting from a web (4) of packaging material, the packaging machine (1) comprising:
- a conveying device for advancing the web (4);
- a sealing system (10) as claimed in any one of the foregoing claims;
- a web folding device (5) for folding the web (4) into a tube (3) and including a plurality of forming rollers (6) arranged to define at least one through passage for the web (4) and configured to interact with the web (4) so as to progressively fold the web (4) into a tubular shape, one of said folding rollers (6) defining said folding member (6).
